# FASCICULE DE BREVET EUROPEEN

(11) **EP 3 515 726 B1**
(45) Date de publication et mention de la délivrance du brevet: **12.08.2020**
(21) Numéro de dépôt: 17784015.4
(22) Date de dépôt: 21.09.2017
(51) Int. Cl.: B60C 1/00, B60C 5/14, B60C 13/00

(54) **PNEUMATIQUE AVEC INSERT A HAUT MODULE**
REIFEN MIT EINEM EINSATZ MIT HOHEM ELASTIZITÄTSMODUL
TYRE WITH AN INSERT HAVING A HIGH MODULUS

(30) Priorité: 25.09.2016 FR 1670547
(43) Date de publication de la demande: 31.07.2019
(73) Titulaire: Compagnie Générale des Etablissements Michelin, 63000 Clermont-Ferrand (FR)
(72) Inventeur: MERINO LOPEZ, José, 63040 Clermont-Ferrand Cedex 09 (FR)
(74) Mandataire: Desbordes, Guillaume
(86) Numéro de dépôt international: PCT/IB2017/055717
(87) Numéro de publication internationale: WO 2018/055537

(56) Documents cités:
- EP-A1- 2 104 710
- KR-A- 20090 068 400

## Description

### DOMAINE TECHNIQUE DE L'INVENTION

La présente invention concerne un pneumatique. Elle concerne plus particulièrement un pneumatique composé à forte proportion de poudre de pneumatiques recyclés.

### ETAT DE LA TECHNIQUE ANTERIEURE

**Le** domaine des pneumatiques est soumis à de nombreux impératifs. En effet, le pneumatique doit offrir des garanties de sécurité, de durabilité, et de bonnes performances. Il est par ailleurs soumis à d'importantes agressions extérieures, tels que les nids de poule ou encore les trottoirs. Il est donc important qu'il ait une résistance élevée.

Par ailleurs, en plus de exigences précédentes, les problématiques environnementales conduisent aujourd'hui au développement de produits plus respectueux de l'environnement. Il est notamment connu l'utilisation de poudre de mélange caoutchoutique de pneumatique recyclé. Cette poudre est constituée de résidus de pneumatiques usés (ou neufs avec des défauts de fabrication) qui sont désassemblés à l 'aide de machines spécialement conçues permettant de récupérer les matériaux caoutchoutiques vulcanisés, et d'extraire les renforts textiles et métalliques. Les matériaux caoutchoutiques extraits sont ensuite broyés pour en faire une poudre (parfois désignée « poudrette » du fait de la taille très fine des particules obtenues). Une poudre de ce type peut être utilisée dans de nombreuses applications où l'on souhaite intégrer des matériaux recyclés, que ce soit pour des raisons économiques et/ou environnementales.

Le document KR2009068400 décrit la composition caoutchoutique d'une doublure intérieure de pneumatique. Cette doublure intérieure est un mélange de caoutchouc butyle halogène, de caoutchouc naturel, de caoutchouc butyle recyclé, de noir de carbone et dans une faible mesure de poudre de déchets de pneumatique.

Le document EP2104710 décrit une bande de roulement de pneumatique composé d'une poudre de gomme de xanthane dans une proportion de 10 à 40pce.

De manière générale, pour les pneumatiques, l'utilisation des poudres de matériaux recyclés reste limitée à des proportions faibles, principalement dans le but de ne pas altérer les performances du pneumatique.

Pour pallier ces différents inconvénients, l'invention prévoit différents moyens techniques.

### EXPOSE DE L'INVENTION

Tout d'abord, un premier objet de l'invention consiste à permettre une utilisation à large échelle des résidus de pneumatiques arrivés en fin de vie.

**Un** autre objet de l'invention consiste à diminuer les coûts de matière première des pneumatiques tout en assurant un maintient du niveau de qualité des produits fabriqués.

Un autre objet de l'invention consiste à prévoir un pneumatique composé dans une forte proportion de matériaux issus de pneumatiques en fin de vie, sans perte de performance du pneumatique.

Encore un autre objet de l'invention consiste à diminuer les coûts de matière première des pneumatiques tout en permettant de réduire les risques de fissuration par attaque chimique et/ou UV.

Un autre objet consiste à prévoir un pneumatique à coût réduit.

Pour ce faire, l'invention prévoit un pneumatique avec des flancs, une zone sommet pourvue d'une bande de roulement, une structure de renfort s'étendant entre les flancs et passant par la zone sommet, au moins une portion d'un des flancs et/ou du sommet comporte un insert comprenant une première composition élastomère servant de matrice dans lequel est réparti, de façon sensiblement uniforme, une seconde composition élastomère issue de pneumatiques recyclés, le module dynamique de cisaillement G* de la première composition étant supérieur d'au moins 10% au module dynamique de cisaillement G* moyen de la seconde composition, et la proportion de seconde composition étant supérieure ou égale à 20% de la masse dudit insert.

**Une** telle architecture, utilisée à l'échelle industrielle pour fabriquer des milliers de produits, permet d'utiliser d'importantes quantités de produits recyclés. Cette approche est favorable à l'environnement d'une part en réduisant la quantité de déchets, et d'autre part en économisant les ressources de matériaux neufs. L'écart de module entre les deux compositions utilisées permet à la matrice de jouer un rôle efficace de cohésion contribuant à la robustesse et à la durabilité de l'ensemble. La proportion des compositions est de préférence déterminée en relation avec la masse des compositions. En effet, la mesure de répartition des proportions en utilisant les volumes de compositions serait plus fastidieuse du fait des volumes souvent complexes à prendre en compte. Cependant, la densité des compositions élastomères des produits neufs du pneumatique et la densité des mélanges de matière élastomère issus de pneumatique recyclés sont très proches. Par conséquent, les proportions de mélanges obtenues par mesures de volume ou de masse sont très proches.

De manière avantageuse, la proportion de seconde composition est supérieure ou égale à 25%, et plus préférentiellement supérieure ou égale à 40%.

**De** manière avantageuse, le module dynamique de cisaillement G* de la première composition est compris en 110% et 600% du module dynamique de cisaillement G* de la seconde composition, et plus préférentiellement entre 120% et 250% du module dynamique de cisaillement G* de la seconde composition.

Selon un mode de réalisation avantageux, le module dynamique de cisaillement G* de la première composition est compris entre 1.2 MPa et 10 MPa, et préférentiellement entre 1.4 MPa et 3 MPa.

Selon un exemple de réalisation, la proportion de seconde composition est supérieure à 60%, et plus préférentiellement supérieure à 80%.

Selon un mode de réalisation avantageux, la première composition élastomère présente un taux élevé d'antioxydants, comme par exemple du 6PPD avec un taux avantageusement supérieur à 2 pce.

De manière avantageuse, la première composition est une composition caoutchoutique.

Selon un autre mode de réalisation avantageux, la seconde composition élastomère présente une granulométrie inférieure ou égale à 1mm et préférentiellement inférieure ou égale à 0,5mm, et encore plus préférentiellement inférieure ou égale à 0,2mm de diamètre moyen de chacune des particules. Une telle granulométrie permet de préparer un mélange hybride bien dosé, avec une excellente répartition de la poudre dans la matrice.

Selon un exemple de réalisation avantageux, l'insert est positionné dans la portion des flancs axialement extérieure à la structure de renfort.

Un tel insert est avantageusement recouvert axialement extérieurement par une couche de protection, telle que une couche de composition élastomère ou un tissu bi-élastique. Une telle couche de protection (de nature élastomère ou en tissu), procure une protection additionnelle contre les attaques chimiques, l'oxydation, les rayons UV, qui seraient susceptibles de causer des fissurations sur l'insert. Le tissu offre des propriétés mécaniques de résistance et de durabilité particulièrement avantageuses.

Dans ce dernier cas, le tissu bi-élastique comporte de préférence de l'élastane. Pour la mise en œuvre, le tissu bi-élastique est avantageusement collé sur l'insert.

Selon un autre exemple de réalisation, l'insert est positionné dans une portion de la zone du pneumatique axialement intérieure à la structure de renfort.

Dans ce dernier cas, il peut être positionné par exemple sous la zone de sommet, et/ou le long d'au moins un des flancs selon la direction radiale, et/ou dans au moins une extrémité axiale de la structure de renfort, encore appelée épaule.

Selon un mode de réalisation avantageux, l'insert est recouvert d'une couche d'étanchéité dépourvue de composition élastomère issue de pneumatiques recyclés.

**La** couche d'étanchéité comporte de préférence plus de 50 pce de butyle et/ou des éléments antioxydants comme par exemple du 6 PPD.

### DESCRIPTION DES FIGURES

Tous les détails de réalisation sont donnés dans la description qui suit, complétée par les figures 1 à 9b, présentées uniquement à des fins d'exemples non limitatifs, et dans lesquelles :
- la figure 1 est une vue coupe schématique d'une moitié d'un exemple de pneumatique pourvu d'un insert agencé sur la zone axialement externe du flanc ;
- les figures 2 à 5 sont des représentations schématiques illustrant l'insert du pneumatique de la figure 1, recouvert de différents agencements de couches de protection ;
- la figure 6 illustre schématiquement l'insert des figures 2 à 5 avant la mise en place d'une couche de protection ;
- la figure 7 est une représentation schématique d'un exemple d'une coupe d'un pneumatique pourvu d'un insert au voisinage de la cavité du pneumatique ;
- la figure 8 est un graphique illustrant les caractéristiques des matériaux utilisés pour effectuer un test comparatif ;
- les figures 9a et 9b illustrent schématiquement la matrice et les particules de l'éprouvette utilisée pour le test comparatif, avant déformation (figure 9a) et après déformation (figure 9b).

### DESCRIPTION DETAILLEE DE L'INVENTION

### Définitions :

**On** entend par module (G*) d'une composition, le module dynamique de cisaillement mesuré à 23°C, et sous une contrainte de cisaillement alternée de 0.7 MPa à une fréquence de 10 Hz.

Pour la composition de matériau recyclé, le module correspond au module de l'ensemble des particules frittées sous une pression de 50 bars, à une température de 150°C pendant 5' après avoir atteint ladite température.

### Insert

Le pneumatique 1 comporte des flancs 2, une zone sommet 3 pourvue d'une bande de roulement 4 et une structure de renfort 5 s'étendant entre les flancs et passant par la zone sommet.

**Au** moins une portion d'un des flancs et/ou du sommet comporte un insert 6 comprenant une première composition élastomère servant de matrice dans lequel est réparti, de façon sensiblement uniforme, une seconde composition élastomère issue de pneumatiques recyclés. Le module G* de la première composition est supérieur d'au moins 10% au module G* de la seconde composition. Plus préférentiellement, le module G* de la première composition est compris en 110% et 600% du module G* de la seconde composition, et encore plus préférentiellement, entre 120% et 250% du module de la seconde composition.

La matrice est composée au moins en partie des élastomères NR, IR, SBR, BR ou de combinaisons de ces élastomères. Au moment de la fabrication, et en particulier avant l'étape de moulage du nouveau pneumatique, cette matrice est un mélange élastomère à l'état cru, c'est à dire avant réticulation. A contrario, le matériau de la seconde composition élastomère, issu de pneumatiques recyclés, est déjà réticulé.

Le module G* de la première composition est compris entre 1.2 **MPa** et 10 MPa, et préférentiellement entre 1.4 MPa et 3 MPa.

Grâce à ces caractéristiques, le taux de produit recyclé peut être particulièrement élevé, sans affecter les propriétés du pneumatique, tant sur le plan du comportement que de l'endurance.

La proportion de seconde composition est supérieure ou égale à 40%, voire supérieure ou égale à 60% et même supérieure ou égale à 80%.

La seconde composition élastomère présente une granulométrie inférieure ou égale à 1mm et préférentiellement inférieure ou égale à 0,5mm, et encore plus préférentiellement inférieure ou égale à 0,2mm de diamètre moyen de chacune des particules.

Par ailleurs, localement, la rigidité de la première composition est supérieure à la rigidité des particules constituant la seconde composition au moins pour 90% des particules.

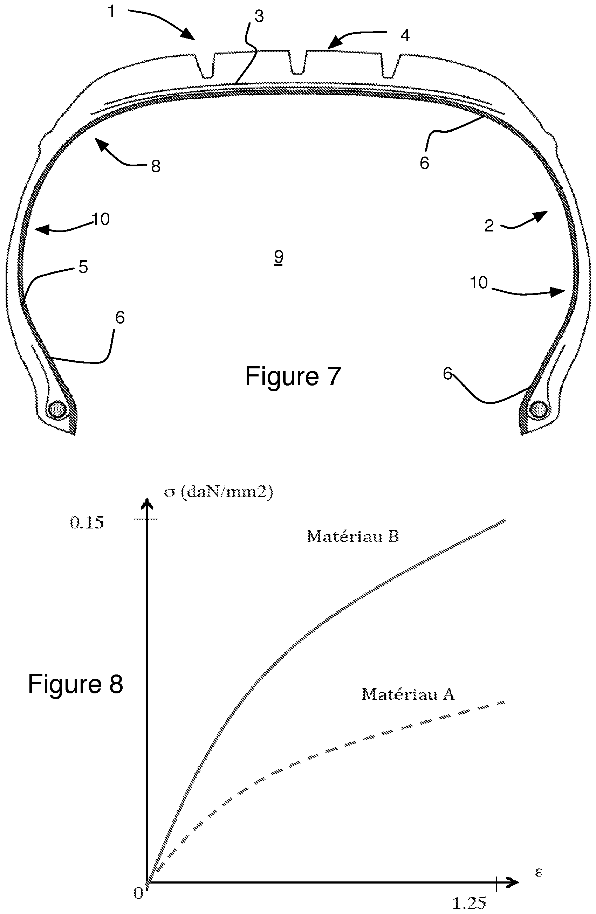

Des essais et calculs comparatif ont été effectués avec deux cas « opposés », sur la base de deux matériaux A et B, le matériau B ayant une rigidité correspondant au double de celle du matériau A. Les caractéristiques de ces matériaux sont illustrées à l'aide du graphique de la figure 8. Ces démarches avaient pour objectif de déterminer précisément les contraintes de cisaillement moyennes supportées au niveau de l'interface des particules dispersées dans une matrice. Les matériaux A et B servent tour à tour de constituant de la matrice et de constituant des particules dispersées dans cette matrice. Le tableau ci-dessous illustre les résultats obtenus.

**Tableau 1 : contraintes de surface au niveau du matériau dispersé dans la matrice pour deux cas opposés**

| | Matériau de la matrice | Matériau dispersé dans la matrice | Contrainte moyenne de surface du matériau dispersé dans la matrice |
|---|---|---|---|
| Cas 1 | A= rigidité inférieure | B= rigidité supérieure | 0.7 MPa |
| Cas 2 | B= rigidité supérieure | A= rigidité inférieure | 0.3 MPa |

Dans le cas 1, l'éprouvette de l'essai comporte une matrice de matériau A « mou » dans laquelle sont dispersées des particules d'un matériau B de rigidité supérieure ;

Dans le cas 2, l'éprouvette de l'essai comporte une matrice de matériau B « dur » dans laquelle sont dispersées des particules d'un matériau A de rigidité inférieure.

Ces essais comparatifs ont permis de constater que la contrainte de surface supportée par les particules dispersées du cas 2 (0.3 MPa) est nettement inférieure à la contrainte supportée par les particules dispersées du cas 1 (0.7 MPa).

Ces essais confirment bien que l'utilisation d'une matrice avec un module supérieur à celui de la composition issue de pneumatiques recyclés qui s'y trouve intégrée procure des propriétés mécaniques nettement plus favorables pour préserver les particules du matériau intégré et assurer une meilleure durabilité de l'ensemble.

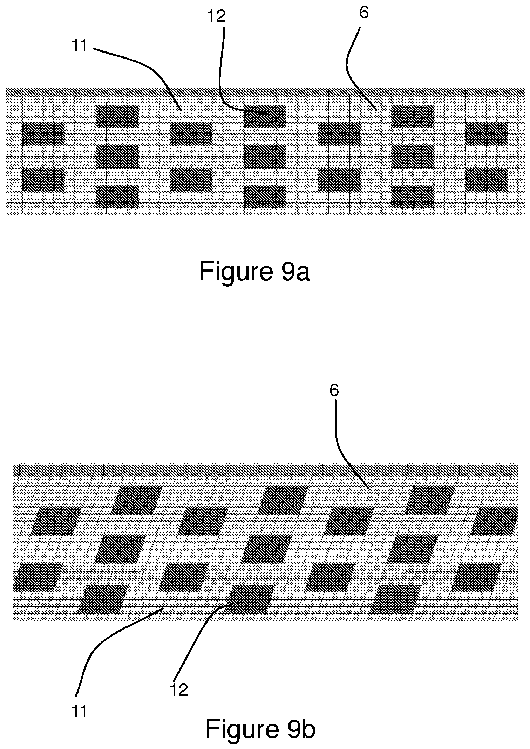

Les figures 9a et 9b illustrent schématiquement la matrice 11 et les particules 12 avant déformation (figure 9a) et après déformation (figure 9b).

**La** zone la plus fragile d'un composé incorporant des particules intégrées se trouve au niveau de l'interface entre les deux matériaux. Il est donc avantageux de lier ces deux composants de la manière la plus robuste possible et de diminuer la sollicitation de ladite interface. La solution proposée permet de fortement diminuer la sollicitation au niveau de l'interface entre la matrice et les particules.

### Exemples d'architectures

### Insert externe

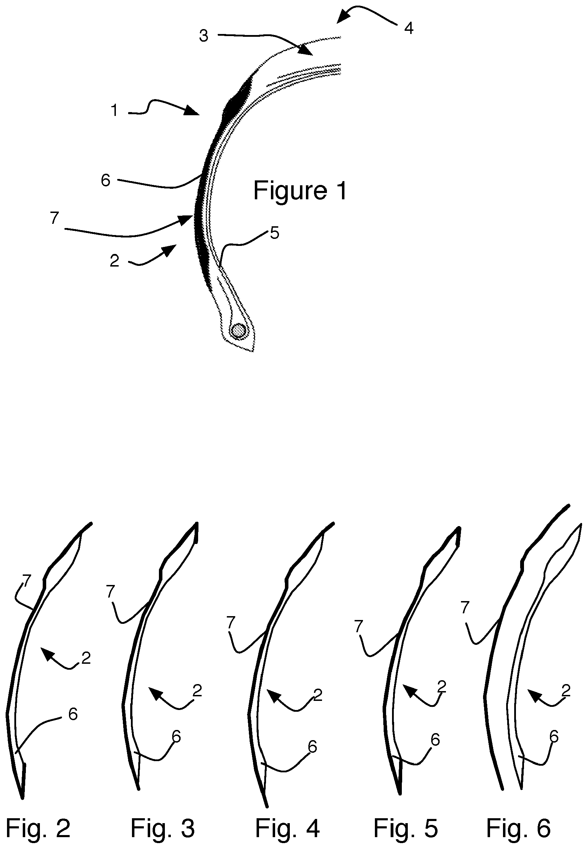

La figure 1 est une représentation schématique d'une vue en coupe d'un exemple de pneumatique comprenant des flancs 2, une zone sommet 3 pourvue d'une bande de roulement 4. Tel qu'illustré, le pneumatique prévoit une structure de renfort 5 qui s'étend d'un flanc à l'autre, en passant par la zone de sommet 3.

Un insert 6 est agencé sur au moins un flanc, contre la portion axialement extérieure à la structure de renfort 5.

Cet insert est constitué par une première composition élastomère servant de matrice dans lequel est réparti, de façon sensiblement uniforme, une seconde composition élastomère issue de pneumatiques recyclés.

La proportion de seconde composition élastomère est supérieure ou égale à 40%, et plus préférentiellement supérieure à 60%.

La seconde composition élastomère présente une granulométrie inférieure à 1mm et préférentiellement inférieure à 0,5mm, et encore plus préférentiellement inférieure à 0,2mm de diamètre moyen de chacune des particules.

Une couche de protection 7 recouvre l'insert afin de le protéger des agressions externes.

En fonction des besoins et usages prévus, la couche 7 de protection peut être réalisée avec une couche de composition élastomère, ou elle peut aussi être constituée d'un tissu bi-élastique, préférentiellement à base d'élastane.

**Les** figures 2 à 5 montrent quatre exemples de réalisation d'insert de flanc avec différents types de pliage de la couche de protection contre une ou deux extrémités de l'insert 6. Dans l'exemple de la figure 2 et de la figure 4, la couche de protection est agencée pour se prolonger au-delà de l'insert. Dans les exemples des figures 2, 3 et 5, la couche de protection est repliée de façon à contourner au moins une des extrémités de l'insert. Le pliage permet d'envelopper l'extrémité radialement inférieure et/ou supérieure de l'insert, pour une meilleure protection.

Pour fabriquer un pneumatique tel que préalablement décrit et illustré, il est prévu un procédé de fabrication d'un pneumatique comprenant une étape préparatoire dans laquelle un insert 6 est préfabriqué. La couche de protection prévue (textile ou élastomère) est ensuite appliquée contre la partie destinée à se trouver du côté externe du pneumatique, tel que montré à la figure 6. Pour faciliter les opérations d'assemblage, la couche de protection est préférablement préencollée avant d'être appliquée contre l'insert. Cette étape est surtout avantageuse dans le cas d'utilisation d'une couche textile. En cas de pliage de la couche de protection contre une des deux ou les deux extrémités de l'insert, le tissu ou la couche élastomère, de la dimension adaptée, est simplement retournée et appliqué contre la ou les zones prévues, tel qu'illustré dans les différents exemples des figures 2 à 5.

En phase industrielle, une pluralité d'insert sont conjointement préparés pour assemblage ultérieur.

Lors de l'assemblage des différents constituants du pneumatique, l'insert est appliqué sur la zone destinée à recevoir l'insert, comme par exemple un flanc 2 du pneumatique en cours de fabrication.

Le mélange composé de la matrice crue et des particules réparties dans la matrice subit ensuite une réaction de réticulation. La réaction de réticulation est avantageusement une vulcanisation.

### Insert au voisinage de la cavité interne du pneumatique

La figure 7 est une représentation schématique d'une vue en coupe d'un exemple de pneumatique comprenant des flancs 2, une zone sommet 3 pourvue d'une bande de roulement 4. Tel qu'illustré, le pneumatique prévoit une structure de renfort 5 qui s'étend d'un flanc à l'autre, en passant par la zone de sommet 3.

**Au** moins une portion de la zone du pneumatique axialement intérieure à la structure de renfort 5 comporte un insert 6, agencé au voisinage (direct ou indirect) de la cavité 9 du pneumatique.

Cet insert est constitué par une première composition élastomère servant de matrice dans lequel est réparti, de façon sensiblement uniforme, une seconde composition élastomère issue de pneumatiques recyclés.

La proportion de seconde composition élastomère est supérieure ou égale à 40%, et plus préférentiellement supérieure ou égale à 60%, et encore plus préférentiellement supérieure ou égale à 80%.

**La** seconde composition élastomère présente une granulométrie inférieure ou égale à 1mm et préférentiellement inférieure ou égale à à 0,5mm, et encore plus préférentiellement inférieure ou égale à 0,2mm de diamètre moyen de chacune des particules.

**Dans** l'exemple illustré, l'insert 6 parcours toute la zone interne du pneumatique, d'un bourrelet à l'autre. Selon diverses variantes de réalisation, l'insert est localisé dans une portion plus restreinte, telle que par exemple, dans la direction radiale dans au moins un des flancs 2, ou le long de la zone sommet 3, sous cette dernière, ou encore dans la zone de l'épaule 8 du pneumatique.

Tel qu'illustré, l'insert est recouvert, du côté de la cavité interne 9 du pneumatique, d'une couche 10 d'étanchéité. Cette couche est dépourvue de composition élastomère issue de pneumatiques recyclés. Elle comporte avantageusement plus de 50 pce de butyle. Elle comporte avantageusement des éléments antioxydants comme par exemple du 6PPD.

L'insert selon l'invention peut être utilisé sur tout type de pneumatique. Ses avantages sont notables sur des pneumatiques pour véhicules poids lourds ou de génie civil. Par exemple, dans les cas des pneumatiques de génie civil, l'épaisseur de l'insert peut être supérieure à 5 mm et, pour certaines dimensions de pneumatiques, atteindre 8 à 10 mm.

D'autres formes, agencements, et/ou positionnements d'inserts sont également possibles. Dans un exemple non illustré, un insert est prévu dans la bande de roulement du pneumatique.

### Numéros de référence employés sur les figures

- 1: Pneumatique
- 2: Flanc
- 3: Zone sommet
- 4: Bande de roulement
- 5: Structure de renfort
- 6: Insert
- 7: Couche de protection
- 8: Epaule
- 9: Cavité du pneumatique
- 10: Couche d'étanchéité
- 11.: Matrice de composition élastomère
- 12: Particule de composition élastomère issue de pneumatiques recyclés

## Revendications

1. Pneumatique (1) avec des flancs (2), une zone sommet (3) pourvue d'une bande de roulement (4), une structure de renfort (5) s'étendant entre les flancs et passant par la zone sommet, au moins une portion d'un des flancs et/ou du sommet comporte un insert (6) comprenant une première composition élastomère servant de matrice dans lequel est réparti, de façon sensiblement uniforme, une seconde composition élastomère issue de pneumatiques recyclés, **caractérisé en ce que** le module dynamique de cisaillement G* de la première composition est supérieur d'au moins 10% au module dynamique de cisaillement G* moyen de la seconde composition, les modules dynamiques de cisaillement G* étant mesurés à 23°C, et sous une contrainte de cisaillement alternée de 0.7 MPa à une fréquence de 10 Hz, **et en ce que** la proportion de seconde composition est supérieure ou égale à 20% de la masse dudit insert (6).

2. Pneumatique (1) selon la revendication 1, **caractérisé en ce que** la proportion de seconde composition est supérieure ou égale à 25%, et plus préférentiellement supérieure ou égale à 40%.

3. Pneumatique (1) selon l'une des revendications 1 ou 2, **caractérisé en ce que** le module dynamique de cisaillement G* de la première composition est compris en 110% et 600% du module dynamique de cisaillement G* de la seconde composition, et plus préférentiellement entre 120% et 250% du module dynamique de cisaillement G* de la seconde composition.

4. Pneumatique (1) selon l'une quelconque des revendications 1 à 3, **caractérisé en ce que** le module dynamique de cisaillement G* de la première composition est compris entre 1.2 MPa et 10 MPa, et préférentiellement entre 1.4 MPa et 3 MPa.

5. Pneumatique (1) selon l'une quelconque des revendications 1 à 4, **caractérisé en ce que** la proportion de seconde composition est supérieure à 60%, et plus préférentiellement supérieure à 80%.

6. Pneumatique (1) selon l'une quelconque des revendications 1 à 5, **caractérisé en ce que** la première composition élastomère présente un taux élevé d'antioxydants.

7. Pneumatique (1) selon l'une quelconque des revendications 1 à 6, **caractérisé en ce que** la première composition est une composition caoutchoutique.

8. Pneumatique (1) selon l'une quelconque des revendications précédentes, **caractérisé en ce que** la seconde composition élastomère présente une granulométrie inférieure ou égale à 1mm et préférentiellement inférieure ou égale à 0,5mm, et encore plus préférentiellement inférieure ou égale à 0,2mm de diamètre moyen de chacune des particules.

9. Pneumatique (1) selon l'une quelconque des revendications 1 à 8, **caractérisé en ce que** l'insert (6) est positionné dans la portion des flancs (2) axialement extérieure à la structure de renfort (5).

10. Pneumatique (1) selon la revendication 9, **caractérisé en ce que** l'insert (6) est recouvert axialement extérieurement par une couche (7) de protection.

11. Pneumatique (1) selon la revendication 10, **caractérisé en ce que** la couche (7) de protection est une couche de composition élastomère ou une couche constituée d'un tissu bi-élastique.

12. Pneumatique (1) selon l'une quelconque des revendications 1 à 8, **caractérisé en ce que** l'insert (6) est positionné dans une portion de la zone du pneumatique axialement intérieure à la structure de renfort (5).

13. Pneumatique (1) selon la revendication 12, **caractérisé en ce que** l'insert (6) est recouvert d'une couche (10) d'étanchéité dépourvue de composition élastomère issue de pneumatiques recyclés.

14. Pneumatique (1) selon la revendication 13, **caractérisé en ce que** la couche (10) d'étanchéité comporte plus de 50 pce de butyle.

15. Pneumatique (1) selon l'une quelconque des revendications 13 ou 14, **caractérisé en ce que** la couche (10) d'étanchéité comporte des éléments antioxydants.

## Patentansprüche

1. Luftreifen (1) mit Flanken (2), einem mit einem Laufstreifen (4) versehenen Scheitelbereich (3), einer Verstärkungsstruktur (5), die sich zwischen den Flanken erstreckt und über den Scheitelbereich geht, wobei mindestens ein Abschnitt einer der Flanken und/oder des Scheitels einen eine als Matrix dienende erste Elastomerzusammensetzung enthaltenden Einsatz (6) aufweist, in dem eine von recycelten Luftreifen stammende zweite Elastomerzusammensetzung im Wesentlichen gleichmäßig verteilt ist, **dadurch gekennzeichnet, dass** der dynamische Schermodul G* der ersten Zusammensetzung um mindestens 10% höher als der mittlere dynamische Schermodul G* der zweiten Zusammensetzung ist, wobei die dynamischen Schermodule G* bei 23°C und unter einer abwechselnden Scherbeanspruchung von 0,7 MPa bei einer Frequenz von 10 Hz gemessen werden, und dass der Anteil der zweiten Zusammensetzung höher als oder gleich 20% der Masse des Einsatzes (6) ist.

2. Luftreifen (1) nach Anspruch 1, **dadurch gekennzeichnet, dass** der Anteil der zweiten Zusammensetzung höher als oder gleich 25%, und bevorzugter höher als oder gleich 40% ist.

3. Luftreifen (1) nach einem der Ansprüche 1 oder 2, **dadurch gekennzeichnet, dass** der dynamische Schermodul G* der ersten Zusammensetzung zwischen 110% und 600% des dynamischen Schermoduls G* der zweiten Zusammensetzung und bevorzugter zwischen 120% und 250% des dynamischen Schermoduls G* der zweiten Zusammensetzung liegt.

4. Luftreifen (1) nach einem der Ansprüche 1 bis 3, **dadurch gekennzeichnet, dass** der dynamische Schermodul G* der ersten Zusammensetzung zwischen 1,2 MPa und 10 MPa und vorzugsweise zwischen 1,4 MPa und 3 MPa liegt.

5. Luftreifen (1) nach einem der Ansprüche 1 bis 4, **dadurch gekennzeichnet, dass** der Anteil der zweiten Zusammensetzung höher als 60% und bevorzugter höher als 80% ist.

6. Luftreifen (1) nach einem der Ansprüche 1 bis 5, **dadurch gekennzeichnet, dass** die erste Elastomerzusammensetzung einen hohen Gehalt an Antioxidantien aufweist.

7. Luftreifen (1) nach einem der Ansprüche 1 bis 6, **dadurch gekennzeichnet, dass** die erste Zusammensetzung eine Kautschuk-Zusammensetzung ist.

8. Luftreifen (1) nach einem der vorhergehenden Ansprüche, **dadurch gekennzeichnet, dass** die zweite Elastomerzusammensetzung eine Granulometrie kleiner als oder gleich 1 mm und vorzugsweise kleiner als oder gleich 0,5 mm, und noch bevorzugter kleiner als oder gleich 0,2 mm mittleren Durchmessers jedes der Teilchen hat.

9. Luftreifen (1) nach einem der Ansprüche 1 bis 8, **dadurch gekennzeichnet, dass** der Einsatz (6) in dem Abschnitt der Flanken (2) axial außen bezüglich der Verstärkungsstruktur (5) positioniert ist.

10. Luftreifen (1) nach Anspruch 9, **dadurch gekennzeichnet, dass** der Einsatz (6) axial außen von einer Schutzschicht (7) bedeckt ist.

11. Luftreifen (1) nach Anspruch 10, **dadurch gekennzeichnet, dass** die Schutzschicht (7) eine Schicht einer Elastomerzusammensetzung oder eine aus einem bielastischen Gewebe bestehende Schicht ist.

12. Luftreifen (1) nach einem der Ansprüche 1 bis 8, **dadurch gekennzeichnet, dass** der Einsatz (6) in einem Abschnitt des Bereichs des Luftreifens axial innen bezüglich der Verstärkungsstruktur (5) positioniert ist.

13. Luftreifen (1) nach Anspruch 12, **dadurch gekennzeichnet, dass** der Einsatz (6) von einer Dichtungsschicht (10) bedeckt ist, die keine von recycelten Luftreifen stammende Elastomerzusammensetzung aufweist.

14. Luftreifen (1) nach Anspruch 13, **dadurch gekennzeichnet, dass** die Dichtungsschicht (10) mehr als 50 pce Butyl aufweist.

15. Luftreifen (1) nach einem der Ansprüche 13 oder 14, **dadurch gekennzeichnet, dass** die Dichtungsschicht (10) oxidationshemmende Elemente aufweist.

## Claims

1. Tyre (1) with sidewalls (2), a crown region (3) provided with a tread (4), a reinforcing structure (5) extending between the sidewalls and passing via the crown region, at least a portion of one of the sidewalls and/or of the crown comprises an insert (6) comprising a first elastomer composition serving as a matrix, within which a second elastomer composition derived from recycled tyres is distributed substantially uniformly, **characterized in that** the dynamic shear modulus G* of the first composition is at least 10% greater than the mean dynamic shear modulus G* of the second composition, the dynamic shear modulus G* of being measured at 23°C under an alternating shear stress of 0.7 MPa at a frequency of 10 Hz **and in that** the proportion of second composition is greater than or equal to 20% of the mass of the said insert (6).

2. Tyre (1) according to Claim 1, **characterized in that** the proportion of second composition is greater than or equal to 25% and more preferentially greater than or equal to 40%.

3. Tyre (1) according to one of Claims 1 and 2, **characterized in that** the dynamic shear modulus G* of the first composition is comprised between 110% and 600% of the dynamic shear modulus G* of the second composition, and more preferentially between 120% and 250% of the dynamic shear modulus G* of the second composition.

4. Tyre (1) according to any one of Claims 1 to 3, **characterized in that** the dynamic shear modulus G*of the first composition is comprised between 1.2 MPa and 10 MPa, and preferentially between 1.4 MPa and 3 MPa.

5. Tyre (1) according to any one of Claims 1 to 4, **characterized in that** the proportion of second composition is greater than 60%, and more preferentially greater than 80%.

6. Tyre (1) according to any one of Claims 1 to 5, **characterized in that** the first elastomer composition has a high content of antioxidants.

7. Tyre (1) according to any one of Claims 1 to 6, **characterized in that** the first composition is a rubber composition.

8. Tyre (1) according to any one of the preceding claims, **characterized in that** the second elastomer composition has a particle size distribution less than or equal to 1 mm and preferentially less than or equal to 0.5 mm and even more preferentially less than or equal to 0.2 mm of mean diameter of each of the particles.

9. Tyre (1) according to any one of Claims 1 to 8, **characterized in that** the insert (6) is positioned in the portion of the sidewalls (2) that is axially outside the reinforcing structure (5).

10. Tyre (1) according to Claim 9, **characterized in that** the insert (6) is covered axially on the outside by a protective layer (7).

11. Tyre (1) according to Claim 10, **characterized in that** the protective layer (7) is a layer of elastomer composition or a layer made of a two-way stretch fabric.

12. Tyre (1) according to any one of Claims 1 to 8, **characterized in that** the insert (6) is positioned in a portion of the region of the tyre that is axially inside the reinforcing structure (5).

13. Tyre (1) according to claim 12, **characterized in that** the insert (6) is covered with an airtight layer (10) devoid of elastomer composition derived from recycled tyres.

14. Tyre (1) according to Claim 13, **characterized in that** the airtight layer (10) comprises more than 50 phr of butyl.

15. Tyre (1) according to any one of Claims 13 or 14, **characterized in that** the airtight layer (10) comprises antioxidants.
